# EUROPEAN PATENT SPECIFICATION

(11) **EP 3 702 915 B1**
(45) Date of publication and mention of the grant of the patent: **20.09.2023**
(21) Application number: 18870677.4
(22) Date of filing: 12.10.2018
(51) Int. Cl.: G06F 9/50

(54) **DATA PROCESSING METHOD AND DEVICE, STORAGE MEDIUM, PROCESSOR, AND SYSTEM**
DATENVERARBEITUNGSVERFAHREN UND -VORRICHTUNG, SPEICHERMEDIUM, PROZESSOR UND SYSTEM
PROCÉDÉ ET DISPOSITIF DE TRAITEMENT DE DONNÉES, SUPPORT DE STOCKAGE, PROCESSEUR, ET SYSTÈME

(30) Priority: 26.10.2017 CN 201711019341
(43) Date of publication of application: 02.09.2020
(73) Proprietor: Alibaba Group Holding Limited, George Town, Grand Cayman (KY)
(72) Inventor: MENG, Xiaobing, Hangzhou Zhejiang 311121 (CN); YAN, Changhai, Hangzhou Zhejiang 311121 (CN)
(74) Representative: Patentgruppen A/S
(86) International application number: PCT/CN2018/109963
(87) International publication number: WO 2019/080719

(56) References cited:
- EP-A1- 3 037 964
- CN-A- 101 743 534
- CN-A- 103 870 341
- CN-A- 106 484 540
- US-A1- 2013 047 158
- US-A1- 2013 047 158
- US-B1- 9 256 467
- US-B2- 9 473 365

## Description

The present application claims priority to Chinese Application No. 201711019341.3, filed on 26 October 2017 and entitled "Data Processing Method, Apparatus, Storage Medium, Processor, and System,".

### Technical Field

The present invention relates to the technical field of computers, and particularly to data processing methods, apparatuses, storage media, processors, and systems.

### Background

Currently, clusters in each region require a set of configurations for resource groups. For example, in container services, clusters in each region need to control configurations of the resource groups.

A resource group can include multiple types of resources, and the carrying capacity of each resource is inconsistent with the carrying capacity of each other resource group. Therefore, the maximum carrying capacity of a resource group is limited by a resource with the smallest capacity in the resource group.

When resources are insufficient, for example, when a resource with the smallest capacity in the resource group has been used up, a capacity expansion is needed. When a capacity expansion is performed, a new set of resources need to be expanded according to a definition of the resource group. That is, all resources in the resource group are expanded, which results in an unnecessary waste of resources to a large extent.

For the above-mentioned problem of wasting resources due to the expansion of all resources in a resource group during a resource expansion, no effective solution has been proposed yet. Documents US 9 256 467 and US 2013/047158 are considered to be relevant prior art documents.

### Summary

Embodiments of the present invention provide data processing method, device, storage medium, processor, and system to at least solve the technical problem of wasting resources due to a capacity expansion of all resources in a resource group during a capacity expansion of a resource. The invention is defined in the independent claims 1, 3 and 5.

According to an aspect of the embodiments of the present invention, a data processing method is provided. The data processing method includes: determining a resource to be expanded in a resource group of a container service, wherein the resource group includes a plurality of different types of resources associated with the container service, and the resource to be expanded is a resource that fails to meet a scheduling requirement among the plurality of different types of resources during resource scheduling; and performing a capacity expansion for the resource to be expanded.

According to another aspect of the embodiments of the present invention, a data processing apparatus is also provided. The data processing apparatus includes: an acquisition module configured to determine a resource to be expanded in a resource group of a container service, wherein the resource group includes a plurality of different types of resources associated with the container service, and the resource to be expanded is a resource that fails to meet a scheduling requirement among the plurality of different types of resources during resource scheduling; and a capacity expansion module configured to perform a capacity expansion for the resource to be expanded.

According to another aspect of the embodiments of the present invention, a storage medium is also provided. The storage medium includes a stored program, wherein the program controls a device where the storage medium is located to perform the data processing method of the embodiments of the present invention when running.

According to another aspect of the embodiments of the present invention, a processor is also provided. The processor is used to run a program, wherein the data processing method of the present invention is performed when the program is run.

According to another aspect of the embodiments of the present invention, a system is also provided. The system includes a processor; and a memory coupled to the processor and configured to provide the processor with instructions for performing the following process: determining a resource to be expanded in a resource group of a container service, wherein the resource group includes a plurality of different types of resources associated with the container service, and the resource to be expanded is a resource that fails to meet a scheduling requirement among a plurality of different types of resources during resource scheduling; and performing a capacity expansion for the resource to be expanded.

In the embodiments of the present invention, a resource to be expanded is determined from a resource group of a container service, where the resource group includes a plurality of different types of resources associated with the container service, and the resource to be expanded is a resource that fails to meet a scheduling requirement among a plurality of different types of resources during resource scheduling. A capacity expansion is performed for the resource to be expanded. Since the capacity expansion is performed for the resource to be expanded that is obtained from the resource group of the container service, rather than performing capacity expansion for all the resources in the resource group of the container service, the purpose of expanding only a resource with an insufficient capacity in a resource group is achieved. Therefore, the waste of resources is reduced when a capacity expansion is performed for the resource, and the technical problem of wasting resources due to a capacity expansion of all resources in a resource group during a capacity expansion of the resource is solved.

### Brief Description of the Drawings

The drawings described herein are used to provide a further understanding of the present invention, and constitute a part of the present application. The schematic embodiments of the present invention and descriptions thereof are used to explain the present invention, and do not form an improper limitation on the present invention. In the drawings:
FIG. 1 is a schematic diagram of a system according to an embodiment of the present invention.
FIG. 2 is a schematic diagram of data processing according to an embodiment of the present invention.
FIG. 3 is a block diagram of a hardware structure of a computer terminal (or a mobile device) for implementing a data processing method according to an embodiment of the present invention.
FIG. 4 is a flowchart of a data processing method according to an embodiment of the present invention.
FIG. 5 is a schematic diagram of a data processing apparatus according to an embodiment of the present invention.
FIG. 6 is a structural block diagram of a computer terminal according to an embodiment of the present invention.

### Detailed Description

In order to enable those skilled in the art to better understand the solutions of the present invention, the technical solutions in the embodiments of the present invention will be clearly and completely described hereinafter with reference to the accompanying drawings in the embodiments of the present invention. Apparently, the described embodiments merely represent some and not all of the embodiments of the present invention. Based on the embodiments of the present invention, all other embodiments obtained by one of ordinary skill in the art without making any creative effort should fall within the scope of protection of the present invention.

It needs to be noted that terms, such as "first", "second", etc., in the specification, claims and the above drawings of the present invention are used to distinguish similar objects, and are not necessarily used to describe a particular order or sequence. It should be understood that data so used may be interchanged whenever appropriate, so that the embodiments of the invention described herein can be implemented in an order other than those illustrated or described herein. Furthermore, terms, such as "including", "having", and any variations thereof, are intended to cover non-exclusive inclusions. For example, a process, method, system, product, or device that includes a series of steps or units are not necessarily limited to those steps or units that are explicitly listed, and may include other steps or units that are not explicitly listed or that are inherent to such process, method, product, or device.

### First Embodiment

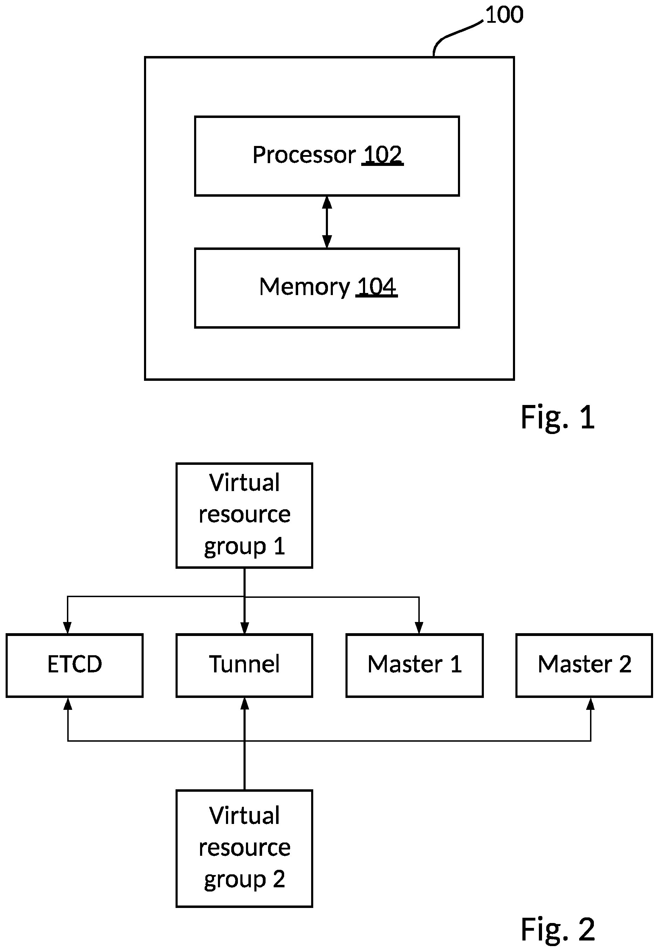

FIG. 1 is a schematic diagram of a system according to an embodiment of the present invention. As shown in FIG. 1, the system 100 includes a processor 102 and a memory 104.

The processor 102;
The memory 104 is coupled to the processor 102, and is configured to provide the processor 102 with instructions for performing the following process: determining a resource to be expanded in a resource group of a container service, wherein the resource group includes a plurality of different types of resources associated with the container service, and the resource to be expanded is a resource that fails to meet a scheduling requirement among a plurality of different types of resources during resource scheduling; and performing a capacity expansion for the resource to be expanded.

The processor 102 of this embodiment runs instructions stored in the memory 104, and the instructions are used for an execution of obtaining resource(s) to be expanded from a resource group of a container service that includes a plurality of different types of resources, and performing a capacity expansion for a resource to be expanded among the plurality of different types of resources that fails to meet a scheduling requirement during resource scheduling, for example, performing a capacity expansion for a resource to be expanded among the plurality of different types of resources that fails to meet a scheduling requirement during resource scheduling.

The processor 102 determines a resource to be expanded from a resource group of a container service. The container service is a highly scalable and high-performance container management service, which can easily run applications on a hosted cloud server instance cluster, and arrange a placement of containers in the cluster according to meet resource and usability requirements, thereby satisfying specific requirements of services or application programs. The container service may be, for example, Tencent cloud container service, and can start and stop application programs, query a complete status of a cluster, and use various cloud services.

The container service of this embodiment includes a resource group. The resource group is a virtual resource group or a logical resource group, which is not a real hard-associated group, but rather is a logical management concept. A number of different types of resources related to the container service may be included therein. The resource group includes three types of management and control resources, which are user cluster management and control resources (Master resources), key-value storage resources (ETCD resources), and network tunnel resources (Tunnel resources) respectively. The resource group can be designed as a combination of the smallest unit of a number of different types of resources. Specifically, each resource group may include a Master unit of the smallest unit, an ETCD resource of the smallest unit, and a tunnel resource of the smallest unit. The capabilities of different types of resources can be characterized by respective capacities that are used for indicating the quotas of resources. As such, resource(s) with insufficient capacity in the resource group is/are determined as resource(s) to be expanded.

**Table 1 Resource Capacity Table of a Resource Group**

| Resource name | Master | ETCD | Tunnel |
|---|---|---|---|
| Capacity | 200 | 350 | 10000+ |

Table 1 is a resource capacity table of a resource group. Such resource group may be a control resource group, which includes a master resource, an ETCD resource, and a tunnel resource respectively. The capacity of the master resource is 200 cluster servers. The capacity of the ETCD resource is 350 cluster servers. The capacity of the Tunnel resource is 10,000+ cluster servers.

A resource to be expanded in this embodiment is a resource among a plurality of different types of resources that fails to meet scheduling requirement(s) during a process of resource scheduling. The scheduling requirement(s) may be reflected by the capacity of the resource. The memory 104 may also be used to provide the processor 102 with instructions for an execution of performing a current capacity of each type of resource in the resource group, and determining one or more types of resources whose current capacity fails to meet a respective capacity requirement as resource(s) to be expanded, so that the processor 102 may obtain the current capacity of each type of resource in the resource group according to the instructions, determine whether the current capacity of each type of resource meets a respective capacity requirement, and determine that one or more types of resources whose current fails to meet the respective capacity requirement as the resource(s) to be expanded. The resource to be expanded may be a resource with the weakest capability in the resource group, and a state thereof may be a state indicating that the resource has been exhausted or a state that indicating that the resource is about to be exhausted.

When a resource in a resource group becomes a resource to be expanded, a warning message indicating that the resource to be expanded needs to be expanded may be issued. For example, a variety of different types of resources in a resource group are a Master resource, an ETCD resource, and a Tunnel resource, wherein the capacity of the Master resource is 200 cluster servers, the capacity of the ETCD resource is 350 cluster servers, and the capacity of the Tunnel resource is 10000+ cluster servers. The capacity of the Master resource is the smallest. When the capacity of the Master resource that is to be required is 300 cluster servers, the amount of resources of the Master resource is insufficient. A determination is then made that the Master resource fails to meet a capacity requirement. The Master resource is therefore determined as a resource to be expanded, and a warning message is issued.

After determining a resource to be expanded from the resource group of the container service, the processor 102 performs a capacity expansion for the resource to be expanded to obtain an expanded resource, through instructions that are provided by the memory 104 for an execution of performing the capacity expansion for the resource to be expanded, thereby realizing the purpose of separately expanding a capacity for the resource to be expanded. When the resource to be expanded is separately expanded, the processor 102 may set an initial capacity of the resource to be expanded as a capacity expansion unit (UNIT), thereby ensuring conditions such as high availability during the capacity expansion. In other words, such capacity expansion unit is a specification that is agreed upon and set up in advance to ensure conditions such as high availability, and may be a capacity expansion unit by default. Therefore, when a capacity expansion is performed for the resource to be expanded, a standard capacity expansion unit is used. Preferably, the initial capacity is the minimum capacity in the resource group. For example, if the initial capacity of the resource to be expanded is 200 cluster servers, then the 200 cluster servers are the minimum capacity in the resource group, and 200 is set as an expansion unit. Each time when a capacity expansion is performed for the resource to be expanded, the capacity expansion is performed for the resource to be expanded according to the expansion unit. Specifically, for each capacity expansion, the capacity expansion is performed for the Master resource using 200 cluster servers as the expansion unit. Each time when capacity expansion is performed for the Master, 200 cluster servers are added to the existing capacity.

For example, if the capacity of the Master resource that is required is 300 cluster servers, and the current capacity of the Master resource is only 200 cluster servers currently, the current capacity of the 200 cluster servers does not meet the required capacity of 300 cluster servers. In this case, a determination is made that the Master resource is insufficient. The Master resource needs to be expanded according to an expansion unit associated with the Master resource. In other words, a capacity expansion is performed for the Master resource according to 200 cluster servers, and the Master resource is expanded to 400 cluster servers to meet the foregoing requirement.

It should be noted that when the processor 102 expands the capacity of a resource to be expanded in a resource group according to instructions stored in the memory 104, other types of resources in the resource group except the resource to be expanded do not need to not be expanded. Specifically, the processor 102 expands only the capacity of the resource to be expanded in the resource group according to the instructions stored in the memory 104, for example, expanding a resource with insufficient capacity in the resource group. Therefore, this realizes expanding the capacity of a resource in a resource group on demand, and thereby avoids the problem of wasting resources caused by a capacity expansion of all resources in the resource group.

After the processor 102 performs the capacity expansion for the resource to be expanded through the instructions provided by the memory 104 and used forthe execution of performing the capacity expansion of the resource to be expanded, the processor 102 may further obtain other types of resources in the resource group that are different from the resource to be expanded, and form a new resource group using the expanded resource and the other types of resources in the resource group that are different from the resource to be expanded through instructions provided by the memory 104 for an execution of forming the new resource group using the expanded resource and the other types of resources in the resource group that are different from the resource to be expanded. The new resource group is a virtual resource group or a logical resource group, which is not a real hard-associated group, but rather is a logical management concept. No limitation is imposed on an order of the expanded resource and the other types of resources in the resource group that are different from the resource to be expanded when forming the new resource group.

Optionally, after the processor 102 performs the capacity expansion for the resource to be expanded, the processor 102 may further distinguish between the resource group before the capacity expansion and the new resource group after the capacity expansion using different identification information through instructions provided by the memory 104 and used for an execution of distinguishing between the resource group before the capacity expansion and the new resource group after the capacity expansion using the different identification information and determining scheduling statuses of the resource group before the capacity expansion and the new resource group after the capacity expansion based on the different identification information. For example, an identification of the resource group before the capacity expansion is 0, and an identification of the new resource group after the capacity expansion is 1. Therefore, respective scheduling statuses of the resource group before the capacity expansion and the new resource group after the capacity expansion in a current process of resource scheduling can be determined according to different identification information. As such, the scheduling statuses of the resource group before the capacity expansion and the new resource group after the capacity expansion can be clearly determined.

Examples are used hereinafter for describing the resource group, the number of different types of resources in the resource group, and the resource to be expanded in the foregoing description.

FIG. 2 is a schematic diagram of data processing according to an embodiment of the present invention. As shown in FIG. 2, a virtual resource group 1 is a resource group of a container service, and includes a Master1 resource, a Master2 resource, an ETCD resource, and a Tunnel resource. The capacity of the Master1 resource may be 200 cluster servers, the capacity of the ETCD resource may be 350 cluster servers, and the capacity of the Tunnel resource may be 10,000+ cluster servers. In comparison, the capacity of the Master1 resource is a resource with the smallest capacity in the resource group. When the capacity of the Master1 resource is required to be 300 cluster servers and the resource of the Master1 resource is insufficient, a determination is made that the Master1 resource does not meet a capacity requirement. Therefore, the Master1 resource is determined as a resource to be expanded, and a warning message is issued. Using 200 as an expansion unit of the Master1 resources, the capacity of Master1 is expanded to obtain a new Master2, where the capacities of Master1 and Master2 resources are both 200. At this time, the capacity of the Master1 resource is used up first, and then an amount of 100 is used from the capacity of the Master2 resource. Master2, the ETCD resource, and the Tunnel resource are then combined to form a new logical resource group, i.e., a virtual resource group 2 is obtained. It should be noted that the virtual resource group 1 and the virtual resource group 2 actually exist at the same time, in which the ETCD resource and the Tunnel resource are common resources of these two virtual resource groups.

When the capacity of Master1 resource needs to be expanded, other resources in the resource group except the Master1 resource do not need to be expanded. At this time, the Master2 resource after the capacity expansion of the Master1 resource, and other resources (which are different from the Master1 resource) are combined to form a new resource group.

Optionally, in a situation that the capabilities of a plurality of different types of resources in a resource group of a container service are the same and when a capacity expansion needs to be performed for resources, the capacities of the plurality of different types of resources in the resource group can be expanded at the same time. In an event that the capabilities of a plurality of different types of resources in a resource group of a container service are not the same, whichever resource is insufficient, such resource is determined as a resource to be expanded, and the capacity thereof is expanded.

For example, the capacity of Master1 resource is 200 cluster servers, the capacity of ETCD1 resource is 350 cluster servers, and the capacity of Tunnel1 resource is 10,000+ cluster servers. A capacity expansion is performed for the Master1 resource to be expanded according to an expansion unit of 200, to obtain a Master2 resource of a capacity of 400 cluster servers after the capacity expansion. The expanded resource and other types of resources in the resource group except the resource to be expanded are formed into a new resource group. The capacities of the resources in the new resource group are 400 cluster servers, 350 cluster servers, and 1000+ cluster servers respectively. In this case, the next time when a shortage of the ETCD1 resource with a capacity of 350 is encountered, the capacity of the ETCD1 resource needs to be expanded. A capacity expansion is performed for the ETCD1 resource to be expanded according to a capacity expansion unit of 350 cluster servers, to obtain an ETCD2 resource of a capacity of 700 cluster servers after the capacity expansion. As such, this realizes the purpose that: whichever resource is insufficient, such resource is determined as a resource to be expanded, and the capacity thereof is expanded. This thus greatly improves a utilization rate of resources.

It should be noted that the Master resource, the ETCD resource, and the Tunnel resource in the embodiments of the present invention are optional resources in a resource group, and do not represent that resources in the resource group in the embodiments of the present invention are only the Master resource, the ETCD resource, the tunnel resource as mentioned above. Any resource that is determined to be expanded from a resource group of a container service is within the scope of protection of the present invention, and no further examples are given herein.

Preferably, the system in the embodiments of the present invention is a data processing system, and may be a capacity expansion system for resources.

The system of this embodiment includes a processor, and a memory coupled to the processor, and configured to provide the processor with instructions for performing the following process: determining a resource to be expanded from a resource group of a container service, wherein the resource group is formed by a plurality of different types of resources, and the resource to be expanded is a resource of the plurality of different types of resources that fails to meet a scheduling requirement during a process of resource scheduling. Since the capacity of a resource to be expanded that is obtained from a resource group of a container service is expanded, rather than the capacities of all the resources in the resource group of the container service are expanded, this therefore achieves the purpose of expanding only the capacity of a resource with insufficient capacity in the resource group. This thereby reduces the waste of resources when the capacity of a resource is expanded, and further solves the technical problem of wasting resources due to performing a capacity expansion for all the resources in a resource group when the capacity of the resource is expanded.

It should be noted that the processor 102 in this embodiment executes various functional applications and data processing by running software programs and modules stored in the memory 104 to implement the data processing method of the embodiments of the present invention. The memory 104 may include a high-speed random access memory, and may further include a non-volatile memory, such as one or more magnetic storage devices, a flash memory, or other non-volatile solid-state memory. In some examples, the memory 104 may further include remote storage device(s) remotely deployed with respect to the processor 102.

### Second Embodiment

According to the embodiments of the present invention, an embodiment of a data processing method is also provided. It should be noted that the steps shown in a flowchart of the accompanying drawings can be executed in a computer system such as a set of computer-executable instructions. Furthermore, although a logical order is shown in a flowchart, in some cases, the steps shown or described may be performed in an order different from those described herein.

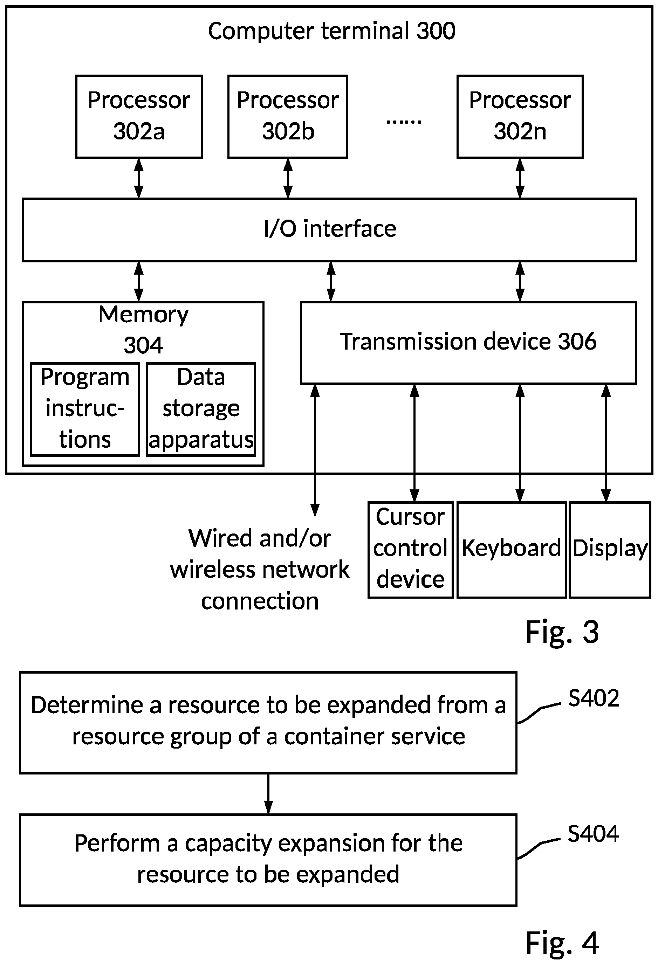

The embodiment of the data processing method provided in the embodiments of the present application may be performed in a mobile terminal, a computer terminal, or a similar computing device. FIG. 3 is a block diagram of a hardware structure of a computer terminal (or a mobile device) for implementing a data processing method according to an embodiment of the present invention. As shown in FIG. 3, a computer terminal 300 (or a mobile device 300) may include one or more (shown with 302a, 302b, ..., 302n in the figure) processors 302 (the processor 302 may include, but is not limited to, a processing device such as a microprocessor MCU or a programmable logic device FPGA, etc.), a memory 304 for storing data, and a transmission device 306 for communication functions. In addition, a display, an input/output interface (I/O interface), a universal serial bus (USB) port (which may be included as one of the I/O interface ports), a network interface, a power supply and/or a camera may also be included. One of ordinary skill in the art can understand that the structure shown in FIG. 3 is only schematic, and does not limit a structure of an electronic device as described above. For example, the computer terminal 300 may further include more or fewer components than those shown in FIG. 3, or have a configuration different from that shown in FIG. 3.

It should be noted that the one or more processors 302 and/or other data processing circuits described above may generally be referred to herein as "data processing circuits". Such data processing circuit may be fully or partially embodied as software, hardware, firmware, or any other combination. In addition, a data processing circuit may be a single independent processing module, or may be wholly or partially incorporated into any one of other elements in the computer terminal 300 (or the mobile device 300). As involved in the embodiments of the present application, the data processing circuit is used as a processor control (for example, a selection of a variable resistance terminal path connected to an interface).

The memory 304 may be used to store software programs and modules of application software, such as program instructions/data storage devices corresponding to the data processing method in the embodiments of the present invention. The processor 302 performs various functional applications and data processing by executing software program(s) and module(s) stored in the memory 304, i.e., implementing the data processing method of the application program. The memory 304 may include a high-speed random access memory, and may further include a non-volatile memory, such as one or more magnetic storage devices, a flash memory, or other non-volatile solid-state memory. In some examples, the memory 304 may further include storage devices remotely provided with respect to the processor 302. These remote storage devices may be connected to the computer terminal 300 through a network. Examples of the network include, but are not limited to, the Internet, an intranet, a local area network, a mobile communication network, and a combination thereof.

The transmission device 306 is used for receiving or transmitting data via a network. A specific example of the above network may include a wireless network provided by a communication provider of the computer terminal 300. In an example, the transmission device 306 includes a network adapter (Network Interface Controller, NIC), which can be connected to other network devices through a base station, so as to communicate with the Internet. In an example, the transmission device 306 may be a radio frequency (RF) module, which is used to communicate with the Internet wirelessly.

The display may be, for example, a liquid crystal display (LCD) of a touch screen type, which can enable a user to interact with a user interface of the computer terminal 300 (or the mobile device 300).

Under the above operating environment, the present application provides a data processing method as shown in FIG. 4. It should be noted that a resource capacity expansion system in this embodiment may be executed by the system in the first embodiment of the present invention. FIG. 4 is a flowchart of a data processing method according to an embodiment of the present invention. As shown in FIG. 4, the data processing method includes the following steps.

Step S402: Determine a resource to be expanded from a resource group of a container service.

In the technical solutions provided in step S402 of the present invention, a resource to be expanded is determined from a resource group of a container service. The resource to be expanded is a resource among a plurality of different types of resources that does not meet a scheduling requirement in a resource scheduling process, where the resource group includes a plurality of different types of resources associated with the container service.

The container service of this embodiment is a highly scalable and high-performance container management service, and can easily run applications on a hosted cloud server instance cluster. A placement of container(s) can be arranged in a cluster according to resource requirements and availability requirements to meet specific requirements of services or applications.

In a container service, a cluster in each region requires a configuration of resource groups, i.e., the cluster in each region requires a configuration of a set of resource groups. Such resource group is a virtual resource group or a logical resource group, which itself is not a real hard-associated group, but rather a logical management concept. A resource group can be designed as a combination of the smallest units of a plurality of different types of resources, Specifically, each resource group may include the smallest unit of a Master resource, the smallest unit of an ETCD resource, and the smallest unit of a Tunnel resource, and include a plurality of different types of resources associated with the container service. The plurality of different types of resources may be characterized by respective capacities that are used to indicate respective quotas of resources. Optionally, the resource to be expanded obtained from the resource group of the container service is a resource with insufficient capacity in the resource group.

Optionally, the resource group is a control resource group, and such resource group includes three types of control resources, which are a master resource, an ETCD resource, and a tunnel resource respectively. Table 1 in the first embodiment shows a resource capacity table of a resource group, which obtains resource(s) to be expanded from a Master resource, an ETCD resource, and a Tunnel resource. The capacity of the Master resource is 200 cluster servers, and the capacity of the ETCD resource is 350 cluster servers, the capacity of the tunnel resource is 10000+ cluster servers. The capacity of the Master resource (200 cluster servers) is the smallest capacity in the resource group. When resources thereof are exhausted, the capacity of the Master resource needs to be expanded. Therefore, the Master resource is determined as the resource to be expanded.

When determining a resource to be expanded from a resource group of a container service, a determination can be made as to whether a resource in the resource group meets a preset condition. The preset condition may be a condition of whether a current capacity of a resource in the resource group meets a capacity requirement. If a current capacity of a resource in the resource group meets a capacity requirement, such resource is determined as a resource to be expanded. The resource to be expanded may be one type or multiple types, which is not limited herein. When only one type of resource is to be expanded, such type of resource can be a resource with the smallest capacity in the resource group. When multiple types of resources are to be expanded, these types of resources can be a plurality of different types of resources with the same and the smallest capacity in the resource group.

When resources in the resource group are severely asymmetric (i.e., a large gap between the capacities of the resources in the resource group exists) and resource(s) with insufficient capacity appear(s), a warning message indicating that the resource(s) with insufficient capacity need(s) to be expanded may be issued. For example, a plurality of different types of resources in a resource group include a Master resource, an ETCD resource, and a Tunnel resource, in which the capacity of the Master resource is 200 cluster servers, the capacity of the ETCD resource is 350 cluster servers, and the capacity of the Tunnel resource is 10000+ cluster servers. The capacity of the Master resource is the smallest. When a resource shortage of the Master resource occurs, a determination is made that the Master resource does not meet a capacity requirement, and the Master resource is determined as a resource to be expanded. A warning message is issued. The warning message may be used for indicating that the resource to be expanded is insufficient, or have been exhausted.

Step S404: Perform a capacity expansion for the resource to be expanded.

In the technical solutions provided in step S404 of the present invention, a capacity expansion is performed for the resource to be expanded.

After determining the resource to be expanded from the resource group of the container service, only the capacity of the resource to be expanded is expanded. Specifically, the capacities of resources in the resource group other than the resource to be expanded are not expanded, thereby preventing from expanding the capacities of all the resources in the resource group, which leads to a waste of resources.

When performing the capacity expansion for the resource to be expanded, a concept of logical virtual resource is introduced. Specifically, a resulting expanded resource is a logical management concept. Optionally, the smallest unit of measurement of each resource is determined as a capacity expansion unit. An initial capacity of a resource to be expanded may be set as a capacity expansion unit, and the capacity expansion unit is used as a standard for measuring the resource when the capacity of the resource is expanded. For example, if an initial capacity of a resource to be expanded is 200 cluster servers and the 200 cluster servers are the smallest capacity in the resource group, the 200 cluster servers are then used as an expansion unit for performing a capacity expansion of the resource to be expanded. A resource obtained after the capacity expansion is 400 cluster servers.

It should be noted that the resource group before the capacity expansion and the resource group after the capacity expansion actually exist at the same time, and may have shared resources. For example, by using 200 as an expansion unit of the Master resource, the capacity of Master1 is expanded to obtain a new Master2. The capacities of Master1 and Master2 resources are both 200. At this time, the capacity of the Master1 resource is used up first, and then 100 is used from the capacity of the Master2 resource. In this case, Master2, the ETCD resource, and the Tunnel resource are combined to form a new logical resource group, i.e., to obtain a resource group after the expansion. The ETCD resource and the tunnel resource are common resources of the resource group before the expansion and the resource group after the expansion.

It should be noted that when the capacity expansion is performed for the resource to be expanded in the resource group, the capacities of other types of resources in the resource group except the resource to be expanded do not need to be expanded. Specifically, the data processing method of this embodiment only performs a capacity expansion for a resource with insufficient capacity in the resource group, and avoids the need to expand all the resources in the resource group when expanding the resource in the resource group. This avoids an unnecessary waste of resources, and improves the utilization efficiency of resources. Therefore, this realizes expanding the capacity of resource(s) in a resource group on demand, and thereby avoids the problem of wasting resources caused by expanding the capacities of all the resources in the resource group.

After the capacity of the resource to be expanded is expanded, other types of resources in the resource group other than the resource to be expanded may be obtained. The expanded resource and the other types of resources in the resource group other than the resource to be expanded may be combined to form a new resource group. The new resource group is a virtual resource group or a logical resource group, which is not a real hard-associated group, but rather a logical management concept. An order of the expanded resource and the other types of resources in the resource group other than the resource to be expanded when forming the new resource group is not limited.

Optionally, in a situation when the capabilities of multiple different types of resources in a resource group of a container service are equal and when the capacities of the resources need to be expanded, the capacities of the multiple different types of resources in the resource group can be expanded at the same time. When the capabilities of multiple different types of resources in a resource group of a container service are not equal, which resource is insufficient, such resource is determined as a resource to be expanded. The capacity thereof is expanded, thereby improving the utilization efficiency of resources.

Through the above steps S402 to S404, the resource to be expanded is determined from the resource group of the container service, wherein the resource group includes a plurality of different types of resources associated with the container service, and a capacity expansion is performed for the resource to be expanded. Since the capacity of the resource to be expanded that is obtained from the resource group of the container service is expanded, rather than the capacities of all the resources in the resource group of the container service are expanded, the purpose of expanding only a resource with insufficient capacity in the resource group is achieved. This therefore reduces the waste of resources when the capacity of the resource is expanded, and further solves the technical problem of wasting resources due to performing a capacity expansion for all the resources in the resource group when the capacity of the resource is expanded.

As an optional implementation, at step S402, obtaining the resource to be expanded from the resource group includes: obtaining a current capacity of each type of resource in the resource group; and determining one or more types of resources whose current capacity fails to meet a capacity requirement as resource(s) to be expanded.

The resource group includes a plurality of different types of resources, and the different types of resources have respective current capacities, which are used to indicate respective current quotas of the resources in the resource group. When obtaining a resource to be expanded from a resource group, a respective current capacity of each type of resource in the resource group is obtained. For example, current capacities of the Master resource, the ETCD resource, and the tunnel resource are obtained as 200 cluster servers, 350 cluster servers, and 10,000+ cluster servers respectively. After obtaining the respective current capacity of each type of resource in the resource group, a determination can be made as to whether the respective current capacity of each type of resource meets a capacity requirement. Optionally, each type of resource has a different capacity requirement. For example, a capacity requirement of the Master resource is 300 cluster servers, a capacity requirement of the ETCD resource is 300 cluster servers, and a capacity requirement of the Tunnel resource is 800 cluster servers. After determining whether the respective current capacity of each type of resource meets the capacity requirement, one or more types of resources whose current capacity does not meet the capacity requirement are determined as resource(s) to be expanded. For example, the current capacity of the Master resource is 200 cluster servers, and does not meet the capacity requirement of 300 cluster servers, the Master resource is determined as a resource to be expanded. The current capacity of the ETCD resource is 350 cluster servers, and meets the capacity requirement of 300 cluster servers. The current capacity of the Tunnel resource is 10,000+ cluster servers, and meets the capacity requirement of 800 cluster servers. As such, the ETCD resource and the Tunnel resource are not resources to be expanded.

In this embodiment, the respective current capacity of each type of resource in the resource group is obtained. One or more types of resources whose current capacity does not meet a capacity requirement are determined as resource(s) to be expanded, thereby achieving the purpose of obtaining the resource(s) to be expanded from the resource group and further performing a capacity expansion for the resource(s) to be expanded, and achieving the purpose of performing a capacity expansion only for resource(s) with insufficient capacity in the resource group. This therefore reduces the waste of resources when the capacity expansion is performed for the resource(s), and further solves the technical problem of wasting resources due to performing a capacity expansion for all the resources in the resource group when the capacity expansion is performed for the resource(s).

As an optional implementation, at step S404, performing the capacity expansion for the resource to be expanded includes: setting an initial capacity of the resource to be expanded as an expansion unit; and expanding the resource to be expanded according to the expansion unit in each capacity expansion.

When performing the capacity expansion for the resource to be expanded, the capacity of the resource to be expanded is expanded according to an expansion unit. The expansion unit is an expansion specification that is agreed upon and set in advance to ensure high availability and is used for measuring each resource. After determining the resource to be expanded from the resource group of the container service, an initial capacity of the resource to be expanded is set as an expansion unit. For example, an initial capacity of the Master resource is 200 cluster servers, and these 200 cluster servers are set as an expansion unit of the Master resource. After the initial capacity of the resource to be expanded is set as the expansion unit, each time the capacity of the Master resource is expanded, the capacity of the resource to be expanded is expanded according to the expansion unit each time when a capacity expansion is performed. For example, the capacity of the Master resource is expanded according to the 200 cluster servers, thereby achieving the purpose of expanding the capacity of the Master resource.

In this embodiment, the initial capacity of the resource to be expanded is set as the expansion unit. During each capacity expansion, the capacity of the resource to be expanded is expanded according to the expansion unit, thereby achieving the purpose of expanding the capacity of the resource to be expanded and achieving the purpose of expanding only a resource with insufficient capacity in the resource group. This therefore reduces the waste of resources when the capacity expansion is performed for the resource, and further solves the technical problem of wasting resources due to performing a capacity expansion for all the resources in the resource group when the capacity expansion is performed for the resource.

As an optional implementation, at step S404, after performing the capacity expansion for the resource to be expanded, the data processing method further includes: combining an expanded resource and other types of resources in the resource group except the resource to be expanded to form a new resource group.

After performing the capacity expansion for the resource to be expanded to obtain an expanded resource, the original resource group of the container service has changed, and the original resource group will be unavailable. At this time, the expanded resource and other types of resources (except the resource to be expanded) in the resource group are grouped together to form a new resource group. The original resource group can be updated using the new resource group.

Optionally, in a situation when the capabilities of multiple different types of resources in a resource group of a container service are equal and when the capacities of the resources need to be expanded, the multiple different types of resources in the resource group can be expanded at the same time. When the capabilities of multiple different types of resources in a resource group of a container service are not equal, which resource is insufficient, such resource is determined as a resource to be expanded. The capacity thereof is expanded.

It should be noted that, when the capacity of the Master1 resource needs to be expanded, resources other than the Master1 resource in the resource group do not need to be expanded. At this time, a new resource group is formed by the Master2 resource after the capacity of the Master1 resource is expanded and the resources other than the Master1 resource.

For example, the capacity of Master1 resource is 200 cluster servers, the capacity of ETCD1 resource is 350 cluster servers, and the capacity of Tunnel1 resource is 10,000+ cluster servers. A capacity expansion is performed for the Master1 resource to be expanded according to an expansion unit of 200 cluster servers, to obtain a Master2 resource of a capacity of 400 cluster servers after the capacity expansion. The expanded resource and other types of resources in the resource group except the resource to be expanded are formed into a new resource group. The capacities of the resources in the new resource group are 400 cluster servers, 350 cluster servers, and 1000+ cluster servers respectively. In this case, the next time when a shortage of the ETCD1 resource with a capacity of 350 is encountered, the capacity of the ETCD1 resource needs to be expanded. A capacity expansion is performed for the ETCD1 resource to be expanded according to a capacity expansion unit of 350 cluster servers, to obtain an ETCD2 resource of a capacity of 700 cluster servers after the capacity expansion. As such, this realizes the purpose that: whichever resource is insufficient, such resource is determined as a resource to be expanded, and the capacity thereof is expanded.

As an optional implementation, after performing the capacity expansion for the resource to be expanded, different identification information is used to distinguish between the resource group before the capacity expansion and the new resource group after the capacity expansion. Respective scheduling statuses of the new resource group after the capacity expansion and the resource group before the capacity expansion are determined based on different identification information.

After performing the capacity expansion for the resource to be expanded, different identification information is used to distinguish between the resource group before the capacity expansion and the new resource group after the capacity expansion. For example, the resource group before the capacity expansion is labeled as 0, and the new resource group after the capacity expansion is labeled as 1. Respective scheduling statuses of the resource group before the capacity expansion and the new resource group after the capacity expansion in a current process of resource scheduling are determined according to different identification information, so that the respective scheduling statuses of the resource group before the capacity expansion and the new resource group after the capacity expansion can be clearly determined.

It should be noted that the Master resource, the ETCD resource, and the Tunnel resource in the embodiments of the present invention are optional resources in a resource group, and do not represent that resources in the resource group in the embodiments of the present invention are only the Master resource, the ETCD resource, the tunnel resource as mentioned above. Any resource that is determined to be expanded from a resource group of a container service is within the scope of protection of the present invention, and no further examples are given herein.

The data processing method of this embodiment is implemented in a container service. In a container service, a cluster in each region requires a configuration of a set of resource groups. The capabilities of each resource in a resource group are also not the same, and the maximum capability that can be handled by the resource group is limited by the one that has the minimum capability among the resources. When the smallest resource has been exhausted and a capacity expansion needs to be performed, a logical virtual resource management concept is introduced, and the smallest unit of the resources in the resource group is regarded as a capacity expansion unit. When a certain type of resource is insufficient, an expansion thereof by one capacity expansion unit according to the standard is needed only. The newly expanded resource and other resources are recombined to form a new resource group. Since a capacity expansion is performed for a resource to be expanded that is obtained from a resource group of a container service, rather than performing a capacity expansion for all the resources in the resource group of the container service, the purpose of expanding only a resource with insufficient capacity in the resource group is achieved. This therefore reduces the waste of resources when the capacity of the resource is expanded, and solves the technical problem of wasting resources due to a capacity expansion of all the resources in the resource group when the capacity of the resource is expanded.

It should be noted that the foregoing method embodiments are all described as a series of action combinations for the ease of description. Those skilled in the art should know that the present invention is not limited by the described order of actions because certain steps may be performed in another order or in parallel according to the present invention. Furthermore, those skilled in the art should also know that the embodiments described in the specification are all preferred embodiments, and actions and modules involved therein may not necessarily be required by the present invention.

Through the description of the above embodiments, those skilled in the art can clearly understand that the data processing method according to the above embodiments can be implemented using software plus a necessary universal hardware platform, and apparently can also be implemented using hardware. However, in many cases, the former is a better implementation. Based on such understanding, the technical solutions of the present invention in essence or a part that contributes to the existing technologies can be embodied in a form of a software product. Such computer software product is stored in a storage medium (such as ROM/RAM, a magnetic disk, an optical disk), and includes a number of instructions configured to cause a terminal device (which may be a mobile phone, a computer, a server, or a network device, etc.) to perform the method described in various embodiments of the present invention.

### Third Embodiment

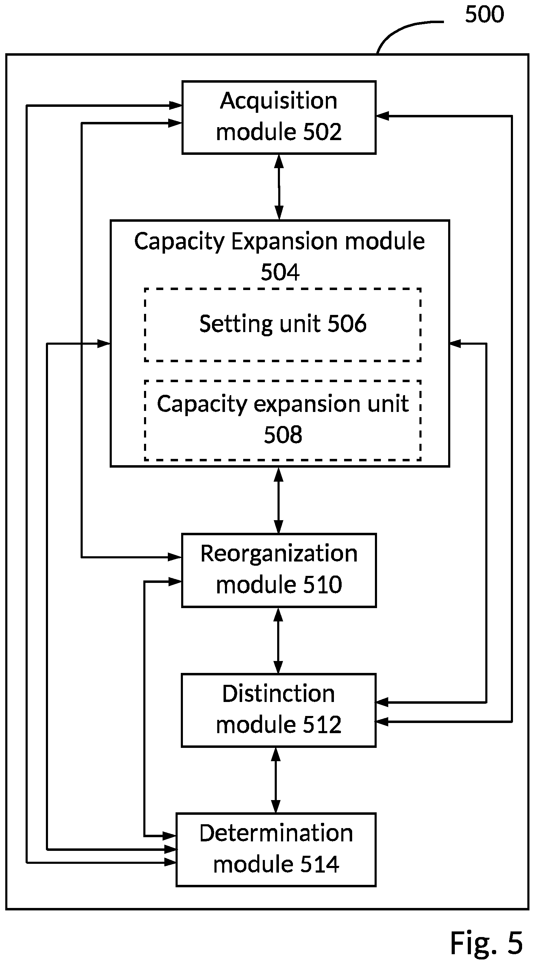

According to the embodiments of the present invention, a data processing apparatus for implementing the above data processing method is also provided. FIG. 5 is a schematic diagram of a data processing apparatus according to an embodiment of the present invention. As shown in FIG. 5, the data processing apparatus 500 includes: an acquisition module 502 and a capacity expansion module 504.

The acquisition module 502 is configured to determine a resource to be expanded from a resource group of a container service, where the resource group includes a plurality of different types of resources associated with the container service.

The container service of this embodiment is a highly scalable and high-performance container management service, and can easily run applications on a hosted cloud server instance cluster. A placement of container(s) can be arranged in a cluster according to resource requirements and availability requirements to meet specific requirements of services or applications.

In a container service, a cluster in each region requires a configuration of resource groups, i.e., the cluster in each region requires a configuration of a set of resource groups. Such resource group is a virtual resource group or a logical resource group, which itself is not a real hard-associated group, but rather a logical management concept. A resource group can be designed as a combination of the smallest units of a plurality of different types of resources, Specifically, each resource group may include the smallest unit of a Master resource, the smallest unit of an ETCD resource, and the smallest unit of a Tunnel resource, and include a plurality of different types of resources associated with the container service. The plurality of different types of resources may be characterized by respective capacities that are used to indicate respective quotas of resources. Optionally, the acquisition unit 502 obtains the resource to be expanded from the resource group of the container service is a resource with insufficient capacity in the resource group.

Optionally, the resource group is a control resource group, and such resource group includes three types of control resources, which are a master resource, an ETCD resource, and a tunnel resource respectively. Table 1 in the first embodiment shows a resource capacity table of a resource group. The acquisition unit 502 obtains resource(s) from a Master resource, an ETCD resource, and a Tunnel resource. The capacity of the Master resource is 200 cluster servers, and the capacity of the ETCD resource is 350 cluster servers, the capacity of the tunnel resource is 10000+ cluster servers. The capacity of the Master resource (200 cluster servers) is the smallest capacity in the resource group. When resources thereof are exhausted, the capacity of the Master resource needs to be expanded. Therefore, the acquisition unit 502 determines the Master resource as the resource to be expanded.

When the acquisition module 502 determines a resource to be expanded from a resource group of a container service, the acquisition module 502 can determine a resource in the resource group meets a preset condition. The preset condition may be a condition of whether a current capacity of a resource in the resource group meets a capacity requirement. If a current capacity of a resource in the resource group meets a capacity requirement, the acquisition module 502 determines such resource as a resource to be expanded. The resource to be expanded may be one type or multiple types, which is not limited herein. When only one type of resource is to be expanded, such type of resource can be a resource with the smallest capacity in the resource group. When multiple types of resources are to be expanded, these types of resources can be a plurality of different types of resources with the same and the smallest capacity in the resource group.

When resources in the resource group are severely asymmetric, the acquisition module 502 may issue a warning message indicating that the resource(s) with insufficient capacity need(s) to be expanded. For example, a plurality of different types of resources in a resource group include a Master resource, an ETCD resource, and a Tunnel resource, in which the capacity of the Master resource is 200 cluster servers, the capacity of the ETCD resource is 350 cluster servers, and the capacity of the Tunnel resource is 10000+ cluster servers. The capacity of the Master resource is the smallest. When a resource shortage of the Master resource occurs, the acquisition module 502 may determine that the Master resource does not meet a capacity requirement, determine the Master resource as a resource to be expanded, and issue a warning message. The warning message may be used for indicating that the resource to be expanded is insufficient, or have been exhausted.

The capacity expansion module 504 is configured to expand the resource to be expanded.

After the acquisition module 502 determines the resource to be expanded from the resource group of the container service, the expansion module 504 only expands the capacity of the resource to be expanded, thereby preventing from expanding the capacities of all the resources in the resource group, which leads to a waste of resources.

When the capacity expansion module 504 performs the capacity expansion for the resource to be expanded, a concept of logical virtual resource is introduced. Specifically, a resulting expanded resource is a logical management concept. The capacity expansion module 504 determines the smallest unit of measurement of each resource as a capacity expansion unit, and may set an initial capacity of a resource to be expanded as a capacity expansion unit, and use the capacity expansion unit as a standard for measuring the resource when the capacity of the resource is expanded. For example, if an initial capacity of a resource to be expanded is 200 cluster servers and the 200 cluster servers are the smallest capacity in the resource group, the 200 cluster servers are then used as an expansion unit for performing a capacity expansion of the resource to be expanded. A resource obtained after the capacity expansion is 400 cluster servers.

It should be noted that when the capacity expansion module 504 performs the capacity expansion for the resource to be expanded in the resource group, the capacities of other types of resources in the resource group except the resource to be expanded do not need to be expanded. Specifically, the data processing method of this embodiment only performs a capacity expansion for a resource with insufficient capacity in a resource group, thereby realizing an expansion of the capacity of resource(s) in the resource group on demand, and thereby avoids the problem of wasting resources caused by expanding the capacities of all the resources in the resource group.

After the capacity expansion module 504 performs the capacity expansion for the resource to be expanded, other types of resources in the resource group other than the resource to be expanded may be obtained. The expanded resource and the other types of resources in the resource group other than the resource to be expanded may be combined to form a new resource group. The new resource group is a virtual resource group or a logical resource group, which is not a real hard-associated group, but rather a logical management concept. An order of the expanded resource and the other types of resources in the resource group other than the resource to be expanded when forming the new resource group is not limited.

Optionally, in a situation when the capabilities of multiple different types of resources in a resource group of a container service are equal and when the capacities of the resources need to be expanded, the capacity expansion module 504 can expand the capacities of the multiple different types of resources in the resource group at the same time. When the capabilities of multiple different types of resources in a resource group of a container service are not equal, which resource is insufficient, the capacity expansion module 504 determines that such resource is a resource to be expanded, and expands the capacity thereof.

Optionally, the resource group includes a plurality of different types of resources, and the different types of resources have respective current capacities. When obtaining a resource to be expanded from a resource group, a respective current capacity of each type of resource in the resource group is obtained. For example, current capacities of the Master resource, the ETCD resource, and the tunnel resource are obtained as 200 cluster servers, 350 cluster servers, and 10,000+ cluster servers respectively. After obtaining the respective current capacity of each type of resource in the resource group, a determination is made as to whether the respective current capacity of each type of resource meets a capacity requirement. Optionally, each type of resource has a different capacity requirement. For example, a capacity requirement of the Master resource is 300 cluster servers, a capacity requirement of the ETCD resource is 300 cluster servers, and a capacity requirement of the Tunnel resource is 800 cluster servers. After determining whether the respective current capacity of each type of resource meets the capacity requirement, one or more types of resources whose current capacity does not meet the capacity requirement are determined as resource(s) to be expanded. For example, the current capacity of the Master resource is 200 cluster servers, and does not meet the capacity requirement of 300 cluster servers, the Master resource is determined as a resource to be expanded. The current capacity of the ETCD resource is 350 cluster servers, and meets the capacity requirement of 300 cluster servers. The current capacity of the Tunnel resource is 10,000+ cluster servers, and meets the capacity requirement of 800 cluster servers. As such, the ETCD resource and the Tunnel resource are not resources to be expanded.

Optionally, the capacity expansion module 504 includes a setting unit 506 and a capacity expansion unit 508. The setting unit 506 is configured to set an initial capacity of the resource to be expanded as a capacity expansion unit; and the capacity expansion unit 508 is configured to expand the capacity of the resource to be expanded according to the capacity expansion unit each time when the capacity is expanded.

When the capacity expansion module 504 performs the capacity expansion for the resource to be expanded, the capacity of the resource to be expanded is expanded according to an expansion unit. The expansion unit is an expansion specification that is agreed upon and set in advance to ensure high availability and is used for measuring each resource. After determining the resource to be expanded from the resource group of the container service, the setting unit 506 sets an initial capacity of the resource to be expanded as an expansion unit. For example, an initial capacity of the Master resource is 200 cluster servers, and the setting unit 506 sets 200 cluster servers as a capacity expansion unit of the Master resource, and the capacity expansion unit 508 expands the capacity of the Master resource according to 200 cluster servers each time when the capacity of the Master resource is expanded, thereby achieving the purpose of expanding the capacity of the Master resource.

Optionally, the data processing apparatus 500 further includes a reorganization module 510 configured to form a new resource group from an expanded resource and other types of resources in the resource group except the resource to be expanded.

After the capacity expansion module 504 performs the capacity expansion for the resource to be expanded and obtains an expanded resource, the original resource group of the container service has changed. At this time, the reorganization module 510 combines the expanded resource and types of resources in the resource group except the resource to be expanded to form a new resource group.

Optionally, in a situation when the capabilities of multiple different types of resources in a resource group of a container service are equal and when the capacities of the resources need to be expanded, the capacity expansion module 504 can expand the multiple different types of resources in the resource group at the same time. When the capabilities of multiple different types of resources in a resource group of a container service are not equal, which resource is insufficient, the capacity expansion module 504 determines that such resource is a resource to be expanded, and expands the capacity thereof.

It should be noted that, when the capacity expansion module 504 needs to expand the capacity of the Master1 resource, resources other than the Master1 resource in the resource group do not need to be expanded. At this time, the reorganization module 510 forms a new resource group by combining the Master2 resource after the capacity of the Master1 resource is expanded and the resources other than the Master1 resource.

For example, the capacity of Master1 resource is 200 cluster servers, the capacity of ETCD1 resource is 350 cluster servers, and the capacity of Tunnel1 resource is 10,000+ cluster servers. The expansion capacity module 504 performs a capacity expansion for the Master1 resource to be expanded according to an expansion unit of 200 cluster servers, to obtain a Master2 resource of a capacity of 400 cluster servers after the capacity expansion. The reorganization module 510 combines the expanded resource and other types of resources in the resource group except the resource to be expanded to form a new resource group. The capacities of the resources in the new resource group are 400 cluster servers, 350 cluster servers, and 1000+ cluster servers respectively. In this case, the next time when a shortage of the ETCD1 resource with a capacity of 350 is encountered, the capacity expansion module 504 needs to expand the capacity of the ETCD1 resource, and performs a capacity expansion is for the ETCD1 resource to be expanded according to a capacity expansion unit of 350 cluster servers, to obtain an ETCD2 resource of a capacity of 700 cluster servers after the capacity expansion. As such, this realizes the purpose that: whichever resource is insufficient, such resource is determined as a resource to be expanded, and the capacity thereof is expanded.

Optionally, the data processing apparatus 500 further includes: a distinction module 512 and a determination module 514. The distinction module 512 is configured to distinguish between the resource group before the capacity expansion and the new resource group after the capacity expansion by using different identification information after the capacity of the resource to be expanded is expanded. The determination module 514 is configured to determine respective scheduling statuses of the resource group before the capacity expansion and the new resource group after the capacity expansion according to the different identification information.

The distinction module 512 uses different identification information to distinguish between the resource group before the capacity expansion and the new resource group after the capacity expansion. For example, an identifier of the resource group before the capacity expansion is 0, and an identifier of the new resource group after the capacity expansion is 1. The determination module 514 then determines respective scheduling statuses of the resource group before the capacity expansion and the new resource group after the capacity expansion in a current process of resource scheduling according to the different identification information, so that the respective scheduling statuses of the resource group before the capacity expansion and the new resource group after the capacity expansion can be clearly determined.

In this embodiment, the acquisition module 502 determines a resource to be expanded from a resource group of a container service, wherein the resource group includes a plurality of different types of resources associated with the container service. The expansion module 504 expands the capacity of the resource to be expanded. Since a capacity expansion is performed for a resource to be expanded that is obtained from a resource group of a container service, rather than performing a capacity expansion for all the resources in the resource group of the container service, the purpose of expanding only a resource with insufficient capacity in the resource group is achieved. This therefore reduces the waste of resources when the capacity of the resource is expanded, and solves the technical problem of wasting resources due to a capacity expansion of all the resources in the resource group when the capacity of the resource is expanded.

It needs to be noted here that the determination module 100 and the sending module 102 correspond to steps S402 to S404 in the second embodiment. The examples and application scenarios implemented by these two modules are the same as those of the corresponding steps, but are not limited to the content described in the second embodiment. It should be noted that the modulescan be run in the computer terminal 300 provided in the second embodiment as a part of the device.

### Fourth Embodiment

The embodiments of the present invention may provide a computer terminal, and the computer terminal may be any computer terminal device in a computer terminal group. Optionally, in this embodiment, the computer terminal as described above may also be replaced with a terminal device such as a mobile terminal.

Optionally, in this embodiment, the computer terminal may be located in at least one network device among multiple network devices in a computer network.

In this embodiment, the above computer terminal may execute program codes of the following steps in a data processing method of an application program: determining a resource to be expanded from a resource group of a container service, wherein the resource group includes a plurality of different types of resources; and performing a capacity expansion for the resource to be expanded.

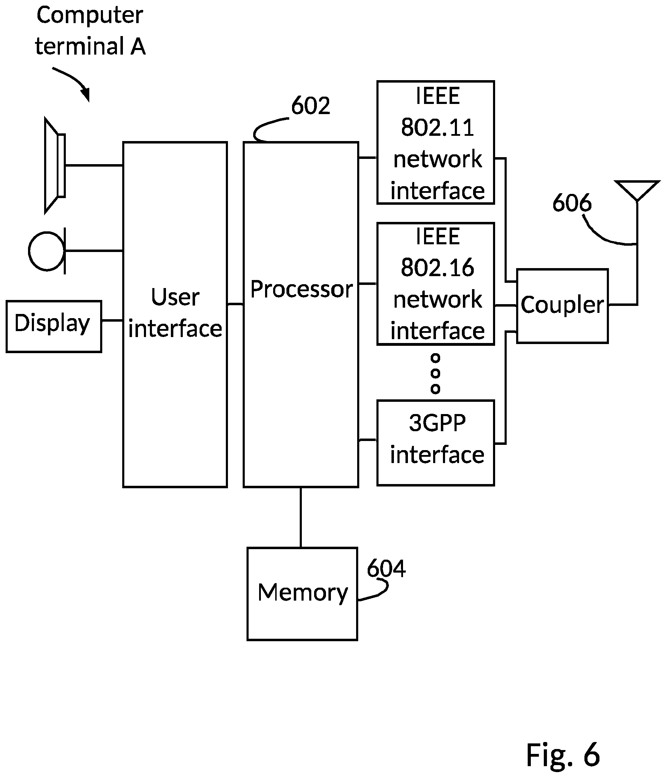

Optionally, FIG. 6 is a structural block diagram of a computer terminal according to an embodiment of the present invention. As shown in FIG. 6, the computer terminal A may include one or more processors 602 (only one is shown in the figure), a memory 604, and a transmission device 606.

The memory may be used to store software programs and modules, such as program instructions/modules corresponding to the data processing methods and apparatuses in the embodiments of the present invention. The processor executes various functional applications and data processing by running software programs and modules stored in the memory, i.e., implementing the above-mentioned data processing methods. The memory may include a high-speed random access memory, and may also include a non-volatile memory, such as one or more magnetic storage devices, a flash memory, or other non-volatile solid-state memory. In some examples, the memory may further include storage devices remotely provided with respect to the processor, and these remote storage devices may be connected to the computer terminal A through a network. Examples of the network include, but are not limited to, the Internet, an intranet, a local area network, a mobile communication network, and a combination thereof.

The processor may call information and application programs stored in the memory through the transmission device to perform the following steps: determining a resource to be expanded from a resource group of a container service, the resource to be expanded being a resource that fails to meet a scheduling requirement among multiple different types of resources, wherein the resource group includes a plurality of different types of resources associated with the container service; and performing a capacity expansion for the resource to be expanded.

Optionally, the processor may further execute program codes of the following steps: obtaining a respective current capacity of each type of resource in the resource group; and determining one or more types of resources whose current capacity fails to meet a capacity requirement as resource(s) to be expanded.

Optionally, the processor may further execute program codes of the following steps: setting an initial capacity of the resource to be expanded as a capacity expansion unit; and expanding a capacity of the resource to be expanded according to the capacity expansion unit in each capacity expansion.

Optionally, the processor may further execute program codes of the following steps: grouping an expanded resource and other types of resources in the resource group except the resources to be expanded to form a new resource group after expanding the capacity of the resource to be expanded.

Optionally, the processor may further execute program codes of the following steps: using different identification information to distinguish between the resource group before the capacity expansion and the new resource group after the capacity expansion after expanding the capacity of the resource to be expanded; and determining respective scheduling statuses of the resource group before the capacity expansion and the new resource group after the capacity expansion according to the different identification information.

Using the embodiments of the present invention, a data processing method is provided. In the embodiments of the present invention, resource(s) to be expanded is/are determined from a resource group of a container service, wherein the resource group includes a plurality of different types of resources associated with the container service. A capacity expansion is performed for the resource(s) to be expanded. Since a capacity expansion is performed for a resource to be expanded that is obtained from a resource group of a container service, rather than performing a capacity expansion for all the resources in the resource group of the container service, the purpose of expanding only a resource with insufficient capacity in the resource group is achieved. This therefore reduces the waste of resources when the capacity of the resource is expanded, and solves the technical problem of wasting resources due to a capacity expansion of all the resources in the resource group when the capacity of the resource is expanded.

Those of ordinary skill in the art can understand that the structure shown in FIG. 6 is schematic only, and the computer terminal A may also be a smart phone (such as an Android phone, an iOS phone, etc.), a tablet computer, a handheld computer, a mobile Internet device (MID), a PAD, or other terminal devices. FIG. 6 does not limit the structure of an electronic device. For example, the computer terminal A may further include more or fewer components (such as a network interface, a display device, etc.) than those shown in FIG. 6, or have a configuration different from that shown in FIG. 6.

Those of ordinary skill in the art may understand that all or part of the steps in various methods of the foregoing embodiments may be completed by using a program to instruct hardware associated with a terminal device. The program may be stored in a computer-readable storage medium, and the storage medium may include a flash disk, a read-only memory (ROM), a random access memory (RAM), a magnetic disk, or an optical disk, etc.

### Fifth Embodiment

The embodiments of the present invention also provide a storage medium. Optionally, in this embodiment, the storage medium may be used to store program codes executed by the data processing method provided in the first embodiment.

Optionally, in this embodiment, the storage medium may be located in any computer terminal in a computer terminal group in a computer network, or in any mobile terminal in a mobile terminal group.

Optionally, in this embodiment, the storage medium is configured to store program codes for performing the following steps: determining a resource to be expanded from a resource group of a container service, the resource to be expanded being a resource among multiple different types of resources that fails to meet a scheduling requirement during a resource scheduling process, wherein the resource group includes a plurality of different types of resources associated with the container service; and performing a capacity expansion for the resource to be expanded.

The storage medium is further configured to store program codes for performing the following steps: setting an initial capacity of the resource to be expanded as a capacity expansion unit; and expanding a capacity of the resource to be expanded according to the capacity expansion unit in each capacity expansion.

The storage medium is further configured to store program codes for performing the following steps: combining an expanded resource and other types of resources in the resource group except the resource to be expanded to form a new resource group after the capacity of the resource to be expanded is expanded.

The storage medium is further configured to store program codes for performing the following steps: using different identification information to distinguish between the resource group before the capacity expansion and the new resource group after the capacity expansion after expanding the capacity of the resource to be expanded; and determining respective scheduling statuses of the resource group before the capacity expansion and the new resource group after the capacity expansion according to the different identification information.

The sequence numbers of the foregoing embodiments of the present invention are only used for description, and do not represent quality of the embodiments.

In the above embodiments of the present invention, a description of each embodiment has its own emphasis. For a part that is not described in detail in an embodiment, reference may be made to the descriptions of other embodiments.

In the embodiments provided in the present application, it should be understood that the disclosed technical content can be implemented in other ways. The apparatus embodiments described above are only schematic. For example, a division of units is only a division of logical functions. In practical implementation, other manners of division may exist. For example, multiple units or components may be combined or may be integrated into another system, or some features may be ignored or not implemented. In addition, mutual coupling or direct coupling or communication connection that is presented or described may be indirect coupling or communication connection through some interfaces, units or modules, and may be in electrical or other forms.

The units described as separate components may or may not be physically separated. The components presented as units may or may not be physical units, may be located in a single place, or may be distributed among multiple network units. Some or all of the units may be selected according to actual needs to achieve the objectives of the solutions of this embodiment.

In addition, various functional units in various embodiments of the present invention may be integrated into a single processing unit. Alternatively, each unit may exist separately in a physical form. Alternatively, two or more units may be integrated into one unit. The above integrated unit may be implemented in a form of hardware or in a form of a software functional unit.

When being implemented in a form of a software functional unit and sold or used as an independent product, the integrated unit may be stored in a computer-readable storage medium. Based on such understanding, the technical solutions of the present invention in essence, or a part that contributes to the existing technologies, or all or part of the technical solutions, can be embodied in a form of a software product. Such computer software product is stored in a storage medium, and includes a number of instructions to cause a computing device (which may be a personal computer, a server, or a network device, etc.) to perform all or part of the steps of the methods described in various embodiments of the present invention. The storage media include various types of media that can store program codes, such as a U disk, a read-only memory (ROM), a random access memory (RAM), a mobile hard disk, a magnetic disk, or an optical disk, etc.

The foregoing describes preferred embodiments of the present invention. It should be noted that those of ordinary skill in the art can make a number of improvements and modifications without departing from the principles of the present invention. These improvements and modifications shall also fall within the scope of protection of the present invention.

## Claims

1. A data processing method comprising:
determining a resource to be expanded in a resource group of a container service, wherein the resource group includes a plurality of different types of resources associated with the container service, and the resource to be expanded is a resource that fails to meet a scheduling requirement among the plurality of different types of resources during resource scheduling;
performing a capacity expansion for the resource to be expanded to obtain an expanded resource; and **characterised in**:
combining the expanded resource and other types of resources in the resource group except the resource to be expanded, to form a new resource group; using different identification information to distinguish between the resource group before the capacity expansion and the new resource group after the capacity expansion that is after expanding the capacity of the resource to be expanded; and
determining respective scheduling statuses of the resource group before the capacity expansion and the new resource group after the capacity expansion according to the different identification information.

2. The method of claim 1, wherein performing the capacity expansion for the resource to be expanded comprises:
setting an initial capacity of the resource to be expanded as a capacity expansion unit; and
expanding a capacity of the resource to be expanded according to the capacity expansion unit in each capacity expansion.

3. A data processing apparatus comprising:
an acquisition module configured to determine a resource to be expanded in a resource group of a container service, wherein the resource group includes a plurality of different types of resources associated with the container service, and the resource to be expanded is a resource that fails to meet a scheduling requirement among the plurality of different types of resources during resource scheduling;
a capacity expansion module configured to perform a capacity expansion for the resource to be expanded to obtain an expanded resource; and **characterised in**:
a reorganization module configured to combine the
expanded resource and other types of resources in the resource group except the resource to be expanded, to form a new resource group;
a distinction module configured to use different identification information to distinguish between the resource group before the capacity expansion and the new resource group after the capacity expansion that is after expanding the capacity of the resource to be expanded; and
a determination module configured to determine respective scheduling statuses of the resource group before the capacity expansion and the new resource group after the capacity expansion according to the different identification information.

4. The apparatus of claim 3, wherein the capacity expansion module comprises:
a setting unit configured to set an initial capacity of the resource to be expanded as a capacity expansion unit; and
a capacity expansion unit configured to expand a capacity of the resource to be expanded according to the capacity expansion unit each time when the capacity is expanded.

5. One or more computer readable media storing executable instructions that, when executed by one or more processors, cause the one or more processors to perform acts comprising:
determining a resource to be expanded in a resource group of a container service, wherein the resource group includes a plurality of different types of resources associated with the container service, the resource to be expanded being a resource that fails to meet a scheduling requirement during resource scheduling;
performing a capacity expansion for the resource to be expanded to obtain an expanded resource; and **characterised in**:
combining the
expanded resource and other types of resources in the resource group except the resource to be expanded, to form a new resource group;
using different identification information to distinguish between the resource group before the capacity expansion and the new resource group after the capacity expansion that is after expanding the capacity of the resource to be expanded; and
determining respective scheduling statuses of the resource group before the capacity expansion and the new resource group after the capacity expansion according to the different identification information.

6. The one or more computer readable media of claim 5, wherein in additional to the resource group includes a plurality of different types of resources associated with the container service, the plurality of different types of resources comprises the resource to be expanded.

7. The one or more computer readable media of claim 6, wherein the resource to be expanded comprises a resource having a smallest capacity among the plurality of different types of resources, or a resource which capacity is exhausted or insufficient.

8. The one or more computer readable media of claim 6 or 7, wherein performing the capacity expansion for the resource to be expanded comprises:
a) performing the capacity expansion for the resource to be expanded only with capacities of other resources of the plurality of different types of resources being unchanged; or
b) setting an initial capacity of the resource to be expanded as a capacity expansion unit; and
expanding a capacity of the resource to be expanded according to the capacity expansion unit in each capacity expansion.

## Patentansprüche

1. Datenverarbeitungsverfahren, umfassend:
Bestimmen einer zu erweiternden Ressource in einer Ressourcengruppe eines Containerdienstes, wobei die Ressourcengruppe eine Vielzahl von unterschiedlichen Arten von Ressourcen einschließt, die dem Containerdienst zugeordnet sind, und die zu erweiternde Ressource eine Ressource ist, die eine Planungsanforderung unter der Vielzahl von unterschiedlichen Arten von Ressourcen während der Ressourcenplanung nicht erfüllt;
Durchführen einer Kapazitätserweiterung für die zu erweiternde Ressource, um eine erweiterte Ressource zu erhalten; und **gekennzeichnet durch:**
Kombinieren der erweiterten Ressource und anderer Arten von Ressourcen in der Ressourcengruppe, mit Ausnahme der zu erweiternden Ressource, um eine neue Ressourcengruppe zu bilden;
Verwenden unterschiedlicher Identifikationsinformationen, um zwischen der Ressourcengruppe vor der Kapazitätserweiterung und der neuen Ressourcengruppe nach der Kapazitätserweiterung, also nach dem Erweitern der Kapazität der zu erweiternden Ressource, zu unterscheiden; und
Bestimmen jeweiliger Planungszustände der Ressourcengruppe vor der Kapazitätserweiterung und der neuen Ressourcengruppe nach der Kapazitätserweiterung gemäß den unterschiedlichen Identifikationsinformationen.

2. Verfahren nach Anspruch 1, wobei das Durchführen der Kapazitätserweiterung für die zu erweiternden Ressource umfasst:
Einstellen einer Anfangskapazität der zu erweiternden Ressource als Kapazitätserweiterungseinheit; und
Erweitern einer Kapazität der zu erweiternden Ressource gemäß der Kapazitätserweiterungseinheit in jeder Kapazitätserweiterung.

3. Datenverarbeitungsvorrichtung, umfassend:
ein Erfassungsmodul, das konfiguriert ist, um eine zu erweiternde Ressource in einer Ressourcengruppe eines Containerdienstes zu bestimmen, wobei die Ressourcengruppe eine Vielzahl von unterschiedlichen Arten von Ressourcen einschließt, die dem Containerdienst zugeordnet sind, und die zu erweiternde Ressource eine Ressource ist, die eine Planungsanforderung unter der Vielzahl von unterschiedlichen Arten von Ressourcen während der Ressourcenplanung nicht erfüllt;
ein Kapazitätserweiterungsmodul, das konfiguriert ist, um eine Kapazitätserweiterung für die zu erweiternde Ressource durchzuführen, um eine erweiterte Ressource zu erhalten; und
**gekennzeichnet durch:**
ein Neuorganisationsmodul, das konfiguriert ist, um die erweiterte Ressource und andere Arten von Ressourcen in der Ressourcengruppe zu kombinieren, mit Ausnahme der zu erweiternden Ressource, um eine neue Ressourcengruppe zu bilden;
ein Unterscheidungsmodul, das konfiguriert ist, um unterschiedliche Identifikationsinformationen zu verwenden, um zwischen der Ressourcengruppe vor der Kapazitätserweiterung und der neuen Ressourcengruppe nach der Kapazitätserweiterung, also nach dem Erweitern der Kapazität der zu erweiternden Ressource, zu unterscheiden; und
ein Bestimmungsmodul, das konfiguriert ist, um jeweilige Planungszustände der Ressourcengruppe vor der Kapazitätserweiterung und der neuen Ressourcengruppe nach der Kapazitätserweiterung gemäß den unterschiedlichen Identifikationsinformationen zu bestimmen.

4. Einrichtung nach Anspruch 3, wobei das Kapazitätserweiterungsmodul umfasst:
eine Einstelleinheit, die konfiguriert ist, um eine Anfangskapazität der zu erweiternden Ressource als Kapazitätserweiterungseinheit einzustellen; und
eine Kapazitätserweiterungseinheit, die konfiguriert ist, um eine Kapazität der zu erweiternden Ressource gemäß der Kapazitätserweiterungseinheit jedes Mal zu erweitern, wenn die Kapazität erweitert wird.

5. Ein oder mehrere computerlesbare Medien, die ausführbare Anweisungen speichern, die, wenn sie von einem oder mehrere Prozessoren ausgeführt werden, bewirken, dass der eine oder die mehreren Prozessoren Handlungen durchführen, die umfassen:
Bestimmen einer zu erweiternden Ressource in einer Ressourcengruppe eines Containerdienstes, wobei die Ressourcengruppe eine Vielzahl von unterschiedlichen Arten von Ressourcen einschließt, die dem Containerdienst zugeordnet sind,
wobei die zu erweiternde Ressource eine Ressource ist, die eine Planungsanforderung während der Ressourcenplanung nicht erfüllt;
Durchführen einer Kapazitätserweiterung für die zu erweiternde Ressource, um eine erweiterte Ressource zu erhalten; und
**gekennzeichnet durch:**
Kombinieren der erweiterten Ressource und anderer Arten von Ressourcen in der Ressourcengruppe, mit Ausnahme der zu erweiternden Ressource, um eine neue Ressourcengruppe zu bilden;
Verwenden unterschiedlicher Identifikationsinformationen, um zwischen der Ressourcengruppe vor der Kapazitätserweiterung und der neuen Ressourcengruppe nach der Kapazitätserweiterung, also nach dem Erweitern der Kapazität der zu erweiternden Ressource, zu unterscheiden; und
Bestimmen jeweiliger Planungszustände der Ressourcengruppe vor der Kapazitätserweiterung und der neuen Ressourcengruppe nach der Kapazitätserweiterung gemäß den unterschiedlichen Identifikationsinformationen.

6. Ein oder mehrere computerlesbare Medien nach Anspruch 5, wobei zusätzlich zu der Ressourcengruppe eine Vielzahl von unterschiedlichen Arten von Ressourcen, die dem Containerdienst zugeordnet sind, enthalten ist, wobei die Vielzahl von unterschiedlichen Arten von Ressourcen die zu erweiternde Ressource umfasst.

7. Ein oder mehrere computerlesbare Medien nach Anspruch 6, wobei die zu erweiternde Ressource eine Ressource, die eine kleinste Kapazität unter der Vielzahl von unterschiedlichen Arten von Ressourcen aufweist, oder eine Ressource umfasst, deren Kapazität erschöpft oder unzureichend ist.

8. Ein oder mehrere computerlesbare Medien nach Anspruch 6 oder 7, wobei das Durchführen der Kapazitätserweiterung für die zu erweiternde Ressource umfasst:
a) Durchführen der Kapazitätserweiterung für die zu erweiternde Ressource nur mit Kapazitäten anderer Ressourcen der Vielzahl von unterschiedlichen Arten von Ressourcen, die unverändert sind; oder
b) Einstellen einer Anfangskapazität der zu erweiternden Ressource als Kapazitätserweiterungseinheit; und
Erweitern einer Kapazität der zu erweiternden Ressource gemäß der Kapazitätserweiterungseinheit in jeder Kapazitätserweiterung.

## Revendications

1. Procédé de traitement de données comprenant :
la détermination d'une ressource à étendre dans un groupe de ressources d'un service de conteneur, dans lequel le groupe de ressources comporte une pluralité de types différents de ressources associées au service de conteneur, et la ressource à étendre est une ressource qui ne satisfait pas une exigence de planification parmi la pluralité de types différents de ressources pendant une planification de ressources ;
la réalisation d'une extension de capacité pour la ressource à étendre pour obtenir une ressource étendue ; et **caractérisé par** :
la combinaison de la ressource étendue et d'autres types de ressources dans le groupe de ressources à l'exception de la ressource à étendre, pour former un nouveau groupe de ressources ;
l'utilisation des informations d'identification différentes pour distinguer le groupe de ressources avant l'extension de capacité du nouveau groupe de ressources après l'extension de capacité qui se trouve après l'extension de la capacité de la ressource à étendre ; et
la détermination d'états de planification respectifs du groupe de ressources avant l'extension de capacité et le nouveau groupe de ressources après l'extension de capacité selon les différentes informations d'identification.

2. Procédé selon la revendication 1, dans lequel la réalisation de l'extension de capacité pour la ressource à étendre comprend :
la définition d'une capacité initiale de la ressource à étendre en tant qu'unité d'extension de capacité ; et
l'extension d'une capacité de la ressource à étendre selon l'unité d'extension de capacité dans chaque extension de capacité.

3. Appareil de traitement de données comprenant :
un module d'acquisition configuré pour déterminer une ressource à étendre dans un groupe de ressources d'un service de conteneur, dans lequel le groupe de ressources comporte une pluralité de types différents de ressources associées au service de conteneur, et la ressource à étendre est une ressource qui ne satisfait pas une exigence de planification parmi la pluralité de types différents de ressources pendant une planification de ressources ;
un module d'extension de capacité configuré pour réaliser une extension de capacité pour la ressource à étendre pour obtenir une ressource étendue ; et
**caractérisé par** :
un module de réorganisation configuré pour combiner la ressource étendue et d'autres types de ressources dans le groupe de ressources à l'exception de la ressource à étendre, pour former un nouveau groupe de ressources ;
un module de distinction configuré pour utiliser des informations d'identification différentes pour distinguer le groupe de ressources avant l'extension de capacité du nouveau groupe de ressources après l'extension de capacité qui se trouve après l'extension de la capacité de la ressource à étendre ; et
un module de détermination configuré pour déterminer des états de planification respectifs du groupe de ressources avant l'extension de capacité et le nouveau groupe de ressources après la capacité d'extension selon les différentes informations d'identification.

4. Appareil selon la revendication 3, dans lequel le module d'extension de capacité comprend :
une unité de définition configurée pour définir une capacité initiale de la ressource à étendre comme une unité d'extension de capacité ; et
une unité d'extension de capacité configurée pour étendre une capacité de la ressource à étendre selon l'unité d'extension de capacité à chaque fois que la capacité est étendue.

5. Support ou supports lisibles par ordinateur stockant des instructions exécutables qui, lorsqu'elles sont exécutées par un ou plusieurs processeurs, amènent le ou les processeurs à réaliser des actions comprenant :
la détermination d'une ressource à étendre dans un groupe de ressources d'un service de conteneur, dans lequel le groupe de ressources comporte une pluralité de types différents de ressources associées au service de conteneur,
la ressource à étendre étant une ressource qui ne satisfait pas une exigence de planification pendant une planification de ressources ;
la réalisation d'une extension de capacité pour la ressource à étendre pour obtenir une ressource étendue ; et
**caractérisé par** :
la combinaison de la ressource étendue et d'autres types de ressources dans le groupe de ressources à l'exception de la ressource à étendre, pour former un nouveau groupe de ressources ;
l'utilisation des informations d'identification différentes pour distinguer le groupe de ressources avant l'extension de capacité du nouveau groupe de ressources après l'extension de capacité qui se trouve après l'extension de la capacité de la ressource à étendre ; et
la détermination d'états de planification respectifs du groupe de ressources avant l'extension de capacité et du nouveau groupe de ressources après l'extension de capacité selon les différentes informations d'identification.

6. Support ou supports lisibles par ordinateur selon la revendication 5, dans lesquels, en plus du groupe de ressources comporte une pluralité de types différents de ressources associées au service de conteneur, la pluralité de types différents de ressources comprend la ressource à étendre.

7. Support ou supports lisibles par ordinateur selon la revendication 6, dans lesquels la ressource à étendre comprend une ressource ayant une plus petite capacité parmi la pluralité de types différents de ressources, ou une ressource dont la capacité est épuisée ou insuffisante.

8. Support ou supports lisibles par ordinateur selon la revendication 6 ou 7, dans lesquels la réalisation de l'extension de capacité pour la ressource à étendre comprend :
a) la réalisation de l'extension de capacité pour la ressource à étendre uniquement avec des capacités d'autres ressources de la pluralité de types différents de ressources restent inchangées ; ou
b) la définition d'une capacité initiale de la ressource à étendre en tant qu'unité d'extension de capacité ; et
l'extension d'une capacité de la ressource à étendre selon l'unité d'extension de capacité dans chaque extension de capacité.
